# EUROPÄISCHE PATENTSCHRIFT

(11) **EP 1 321 329 B1**
(45) Veröffentlichungstag und Bekanntmachung des Hinweises auf die Patenterteilung: **05.05.2010**
(21) Anmeldenummer: 02024568.4
(22) Anmeldetag: 04.11.2002
(51) Int. Cl.: F16H 61/28

(54) **Kraftfahrzeug mit einem Mehrfachkupplungs-Mehrganggetriebe**
Vehicle with double clutch multiple gear transmission
Véhicule automobile avec boîte de vitesse à embrayage double et à rapports multiples

(30) Priorität: 21.12.2001 DE 10163401
(43) Veröffentlichungstag der Anmeldung: 25.06.2003
(73) Patentinhaber: ZF Sachs AG, 97424 Schweinfurt (DE)
(72) Erfinder: Kuhstrebe, Jochen, 97318 Westheim (DE)

(56) Entgegenhaltungen:
- EP-A- 1 067 008
- EP-A- 1 072 820
- DE-A1- 19 751 456
- DE-A1- 19 941 011
- DE-A1- 19 961 117
- DE-C1- 10 001 486
- DE-C2- 19 526 273

## Beschreibung

Die Erfindung betrifft ein Kraftfahrzeug mit einem Mehrfachkupplungs-Mehrganggetriebe, insbesondere Doppelkupplungs-Mehrganggetriebe. Etwas konkreter betrifft die Erfindung ein Kraftfahrzeug mit einem Antriebsstrang, der eine Antriebseinheit, ein Getriebe mit einer ersten und einer zweiten Getriebeeingangswelle und eine Mehrfach-Kupplungseinrichtung, insbesondere Doppel-Kupplungseinrichtung, mit einer der ersten Getriebeeingangswelle zugeordneten ersten Kupplungsanordnung und einer der zweiten Getriebeeingangswelle zugeordneten zweiten Kupplungsanordnung zur Momentenübertragung zwischen der Antriebseinheit und dem Getriebe aufweist, wobei eine Steuereinrichtung vorgesehen ist, durch die vermittels einer dem Getriebe zugeordneten oder zugehörigen Aktuatorik in Zuordnung zu einer jeweiligen der ersten und der zweiten Getriebeeingangswelle Getriebegänge einlegbar und auslegbar und vermittels einer der Kupplungseinrichtung zugeordneten oder zugehörigen Aktuatorik die Kupplungsanordnungen betätigbar sind. Die Erfindung betrifft ferner ein Verfahren zum Schalten eines Mehrfachkupplungsgetriebes, insbesondere Doppelkupplungsgetriebes, sowie eine entsprechende Steuereinrichtung.

Variabel einstellbare Schaltkräfte zum Einlegen bzw. Auslegen von Getriebegängen sind im Zusammenhang mit Einfachkupplungsgetrieben an sich schon Stand der Technik. Die einstellbare Variabilität dient in erster Linie dazu, die Synchronisiereinrichtungen des Getriebes zu schonen, damit diese nicht vorzeitig verschleißen. In automatisierten Einfachkupplungs-Schaltgetrieben (ASG) hat die Getriebebetätigung mit variabel einstellbaren Schaltkräften bereits Eingang in die Serie gefunden. Als Stand der Technik kann beispielsweise auf die folgenden Schriften verwiesen werden:
- Aus der GB 2 119 459 A ist ein Kraftfahrzeug mit einem Antriebsstrang, der eine Antriebseinheit, ein Getriebe mit einer ersten und einer zweiten Getriebeeingangswelle und eine Mehrfach-Kupplungseinrichtung, mit einer der ersten Getriebeeingangswelle zugeordneten ersten Kupplungsanordnung und einer der zweiten Getriebeeingangswelle zugeordneten zweiten Kupplungsanordnung zur Momentenübertragung zwischen der Antriebseinheit und dem Getriebe bekannt. Ein zugehöriges Aktuatorsystem ist hierbei so ausgestaltet, dass zum Schalten der einzelnen Gangstufen der Schaltkraftverlauf zweistufig ausgebildet ist. Die erste Phase weist eine größere Differenzdrehzahl zwischen den zu synchronisierenden Bauteilen auf als die zweite Phase und erfolgt bei niedriger Kraft. Die zweite Phase schießt zeitlich an die erste an und stellt das Ende der Synchronisation dar und erfolgt mit höherer Kraft.
- Aus der DE 195 26 273 C2 ist es bekannt, die Schaltkraft während eines Einrückens einer Schaltgangstufe zu variieren und während der eigentlichen Synchronisierphase mit niedriger Schaltkraft zu agieren.
- Aus der DE 100 01 486 C1 ist es bekannt, Schalthäufigkeiten (Zahl der bisher erfolgten Schaltvorgänge) und die Fahrbahnneigung bei der Bestimmung der Schaltkraft in bestimmten Gangschaltstufen zu berücksichtigen.
- Aus der DE 199 61 117 A1 ist es bekannt, die Schaltkraft abhängig vom Betriebszustand des Kraftfahrzeugs zwischen einem niedrigen und einem hohen Schaltkraftverlauf umzuschalten.
- Die DE 199 41 011 A1 schlägt vor, die Größe einer Ausrückkraft zum Ausrücken eines Kupplungsglieds variabel einstellbar vorzusehen und die Größe der Ausrückkraft in Abhängigkeit von dem an der zu lösenden Gangstufe übertragenen Drehmoment oder/und der Änderungsgeschwindigkeit dieses Drehmoments zu bestimmen.

In jüngerer Zeit haben so genannte Mehrfach- und Doppelkupplungseinrichtungen mit einer einer ersten Getriebeeingangswelle zugeordneten ersten Kupplungsanordnung und einer einer zweiten Getriebeeingangswelle zugeordneten zweiten Kupplungsanordnung ein größeres Interesse gefunden, da diese einen Fahrkomfort ähnlich wie bei einem Vollautomatgetriebe mit Drehmomentwandler versprechen, dabei aber energieeffizienter sind. Durch eine so genannte "Überschneidungsschaltung" ist ein sequentielles Schalten zwischen Getriebegängen ohne Zugkraftunterbrechung möglich. Dabei wird zusätzlich in Zuordnung zu einer momentan nicht lastübertragenden Getriebeeingangswelle im nicht eingerückten Zustand der zugeordneten Kupplungsanordnung ein Getriebegang eingelegt und dann aufeinander abgestimmt die dem momentan eingelegten, lastübertragenen Getriebegang (dem Ausgangsgang) zugeordnete Kupplungsanordnung und die dem zusätzlich eingelegten Getriebegang (dem Zielgang) zugeordnete Kupplungsanordnung gegenläufig betätigt, nämlich synchron die dem Ausgangsgang zugeordnete Kupplungsanordnung ausgerückt und die dem Zielgang zugeordnete Kupplungsanordnung eingerückt.

Die Erfindung schlägt vor, auch bei so genannten Doppelkupptungsgetrieben (verallgemeinert Mehrfachkupplungsgetrieben) variabel einstellbare Schaltkräfte vorzusehen. Für das eingangs genannte Kraftfahrzeug wird speziell vorgeschlagen, dass die dem Getriebe zugeordnete oder zugehörige Aktuatorik dafür ausgelegt ist, variabel einstellbare Schaltkräfte auf Schaltelemente des Getriebes auszuüben, und dass die Steuereinheit dafür ausgelegt ist, auftretenden ersten Schaltanforderungen auf Grundlage von Eingangsdaten oder/und Betriebszuständen des Getriebes oder/und Betriebszuständen der Kupplungseinrichtung oder/und Betreibszuständen der Antriebseinheit oder/und Fahrzuständen des Kraftfahrzeugs niedrige Schaltkräfte bzw. Schaitkraftverläufe mit niedrigeren Schaltkräften zuzuordnen und zweiten Schaltanforderungen höhere Schaltkräfte bzw. Schaltkraftverläufe mit höheren Schaltkräften zuzuordnen und vermittels der dem Getriebe zugeordneten oder zugehörigen Aktuatorik betreffende Gänge mit der jeweils zugeordneten Schaltkraft bzw. dem jeweils zugeordneten Schaltkraftverlauf einzulegen oder/und betreffende Gänge mit der jeweils zugeordneten Schaltkraft bzw. dem jeweils zugeordneten Schaltkraftverlauf auszulegen, wobei die ersten Schaltanforderungen solche Schaltanforderungen umfassen, die nicht in unmittelbarer Reaktion auf eine Einwirkung des Fahrers auf eine Bedienanordnung des Fahrzeugs auftreten und die zweiten Schaltanforderungen solche Schaltanforderungen umfassen, die In unmittelbarer Reaktion auf eine Einwirkung des Fahrers auf eine Bedienanordnung des Fahrzeugs auftreten.

Durch die variabel einstellbaren Schaltkräfte kann einerseits eine Entlastung der Synchronisiereinrichtungen des Getriebes erreicht werden und andererseits doch für eine aus Sicht des Fahrers subjektiv hinreichende Reaktionsgeschwindigkeit betreffend die Getriebebetägigung gesorgt werden. Bei den als erste Schaltanforderungen zu identiftzierenden Schaltanforderungen kann es sich beispielsweise um in einem Vollautomatikmodus auftretende Schaltanforderungen handeln, die beispielsweise in einem D-Betriebszustand der Vollautomatikfunktionalität ohne Einwirkung des Fahrers auftreten.

Bei den als zweite Schaltanforderungen zu identifiizierenden Schaltanforderungen kann es sich ebenfalls um in einem Vollautomatikmodus auftretende Schaltanforderungen handeln, die beispielsweise auf ein starkes Durchtreten des Fahrpedals (so genannter Kick-Down) auftreten. Der Fahrer erwartet in derartigen Fällen eine spontane Reaktion der "Getriebeautomatik", weswegen nach diesem Weiterbildungsvorschlag den betreffenden Schaltanforderungen höhere Schaltkräfte bzw. Schaltkraftverläufe mit höheren Schaltkräften zugeordnet werden.

Die zweiten Schaltanforderungen umfassen solche Schaltanforderungen, die durch den Fahrer vermittels einer/der Bedienanordnung als akuter Schaltwunsch signalisiert werden. Es wird in diesem Zusammenhang beispielsweise an in einem Vollautomatikmodus oder in einem manuellen Modus auftretende Schaltanforderungen gedacht, beispielsweise an Fahrerbefehle, die ein sequentielles Weiterschalten des Getriebes angeben. Es wird hierzu an unter dem Stichwort "Tiptronic" im Fachgebiet bekannte Schaltweisen des Getriebes gedacht, bei denen der Fahrer beispielsweise eine Schaltwippe oder den in einer extra Gasse angeordneten Gangwahlhebel bedient (vgl. beispielsweise DE 199 12 963 A1).

Die Steuereinrichtung kann vorteilhaft dafür ausgelegt sein, zur Vorbereitung einer Überschneidungsschaltung, bei der in Zuordnung zu einer momentan lastübertragenden der Getriebeeingangswellen ein Ausgangsgang und in Zuordnung zu einer momentan nicht lastübertragenden der Getriebeeingangswellen ein Zielgang gleichzeitig eingelegt sind und dann die der bisher lastübertragenden Getriebeeingangswelle zugeordnete Kupplungsanordnung im Sinne eines Ausrückens und die der bisher nicht lastübertragenden Getriebeeingangswelle zugeordnete Kupplungsanordnung im Sinne eines Einrückens betätigt wird, auf Grundlage von Eingangsdaten einen wahrscheinlichen Zielgang zu bestimmen und diesen in Zuordnung zur momentan nicht lastübertragenden Getriebeeingangswelle als potentiellen Zielgang zusätzlich zu einem in Zuordnung zur momentan lastübertragenden Getriebeeingangswelle eingelegten, den Ausgangsgang der vorzubereitenden Überschneidungsschaltung darstellenden Gang (im Folgenden als Ausgangsgang bezeichnet) einzulegen.

Zu diesem Weiterbildungsvorschlag kann speziell auf die DE 199 37 716 C1 verwiesen werden. Diese Patentschrift schlägt vor, eine dem Getriebe zugeordnete elektronische Steuereinrichtung als "Gangprognostizier- und Gangvorwahleinrichtung" auszubilden, durch welche anhand von aktuellen Betriebsdaten bereits vor der Anforderung eines Gangwechsels prognostizierbar ist, ob in Zukunft ein Gangwechsel wahrscheinlich gefordert wird und welches der zukünftige Gang wahrscheinlich sein wird, wobei die Steuereinrichtung dann, wenn ein solcher zukünftiger Gangwechsel wahrscheinlich erscheint, diesen vermittels der Getriebeaktuatorik zur Vorbereitung der Überschneidungsschaltung einlegt. In Abhängigkeit von den Betriebsdaten für die Gangprognostizier- und Gangvorwahlfunktion der Steuereinrichtung besteht nach den Erläuterungen in der Patentschrift für die Steuereinrichtung die Möglichkeit für folgende Entscheidungen: Keine Aussage möglich oder hohe Wahrscheinlichkeit für ein Hochschalten (von einem niedrigeren Ausganggang in einen höheren Zielgang) oder hohe Wahrscheinlichkeit für ein Herunterschalten (von einen höheren Ausgangsgang in einen niedrigeren Zielgang). Es sei angemerkt, dass der Vorschlag der Patentschrift gegenüber sonstigem Stand der Technik zumindest in einer Gesamtschau (vgl. DE 40 31 851 A1, EP 0 827 861 A2, DE-PS 923 402, DE 197 51 456 A1 und Fachzeitschrift "Automotive Engineering, Feb. 1983, S. 80-82) wenig Neues enthält.

Die Patentschrift enthält keine näheren Ausführungen dazu, auf welche Weise die Betriebsdaten ausgewertet und wie aus den verschiedenen, in der Patentschrift angesprochenen Betriebsdaten die genannten Wahrscheinlichkeiten ermittelt werden.

Wenn auch insoweit dem Fachmann noch eine Ausfüllung der Lehre der DE 199 37 716 C1 überlassen bleibt, so ist die dem Vorschlag der Patentschrift zugrunde liegende Intention durchaus sinnvoll. Bei einem Mehrfachkupplungsgetriebe, insbesondere Doppelkupplungsgetriebe, ist es nämlich aus verschiedenen Gründen wünschenswert, die Aktionen eines Fahrers "vorauszuahnen" und aufgrund dieses Wissens den nächsten vom Fahrer gewünschten Gang bereits einzulegen. Es kann dann nämlich unmittelbar auf die Erteilung eines Schaltbefehls durch den Fahrer (beispielsweise manuell durch Betätigung eines Gangwahlhebels oder von Schaltwippen oder durch ein Durchtreten des Fahrpedals zur Initiierung einer so genannten Kick-Down-Schaltung) ohne Zeitverzögerung die Überschneidungsschaltung ausgelöst werden. Gerade bei Kick-Down-Schaltungen erwartet der Fahrer eine spontane Reaktion des Fahrzeugs, was nur realisiert werden kann, wenn bereits der nächstniedrigere Gang eingelegt ist.

Spontane Beschleunigungswünsche des Fahrers, welche eine Rückschaltung erforderlich machen, sind z. B. Situationen, bei denen der Fahrer schon längere Zeit mit relativ konstanter Geschwindigkeit hinter einem langsam fahrenden Fahrzeug herfährt und eine günstige Verkehrssituation zum Überholen nutzen will.

Die angesprochene Patentschrift DE 199 37 716 C1 weist insoweit in die richtige Richtung, es fehlt aber noch an Vorschlägen, wie der "richtige" Zielgang tatsächlich auf Grundlage der Eingangsdaten prognostiziert werden soll.

Soweit es um die Vorbereitung einer Überschneidungsschaltung zum Wechsel zu einem niedrigeren Gang geht, könnte man daran denken, bevorzugt den nächstniedrigeren Gang als potentiellen Zielgang einzulegen, um bei Rückschaltbefehlen spontan reagieren zu können.

Ein solches "Vorhalten" eines niedrigeren Ganges wird aber nicht immer die richtige Wahl sein, da dann bei einem "unerwartet" kommenden Hochschaltbefehl erst der vorgehaltene Gang ausgelegt und der gewünschte höhere Gang eingelegt werden muss, was für den Fahrer zu einer deutlich spürbaren Trägheit des Systems führen würde.

Zudem Drehen bei einem Vorhalten eines niedrigeren Ganges die getriebeseitige Hälfte der betreffenden Kupplungsanordnung und alle zugeordneten Räder und Wellen des Getriebes bis zur zusätzlich eingelegten niedrigeren Gangstufe relativ zur Gangstufe der geschlossenen (lastübertragenden) Kupplungsanordnung schneller und müssen somit bei jedem Beschleunigungsvorgang mitbeschleunigt oder mitabgebremst werden, was aus Energieeffizienzgründen nachteilig ist. Ferner müsste die Drehzahl des eingelegten Ganges zur Vermeidung von Beschädigungen überwacht und bei Überschreiten einer Grenzdrehzahl der eingelegte Gang wieder ausgelegt werden. Bei erneuter Unterschreitung der Grenzezeit müsste der potentielle (niedrigere) Zielgang wieder eingelegt werden, um auf einen möglichen Rückschaltbefehl spontan reagieren zu können.

Demgegenüber wird als besonders bevorzugt vorgeschlagen, dass die Steuereinrichtung dafür ausgelegt ist, eine erhöhte Wahrscheinlichkeit für ein Herunterschalten zu einem gegenüber dem Ausgangsgang niedrigeren Zielgang auf Grundlage des Setzens eines Blinksignals oder/und auf Grundlage einer eine Mindestbetätigung übersteigenden Lenkbetätigung zu erkennen und einen entsprechenden Gang als potentiellen Zielgang vermittels der Aktuatorik einzulegen.

Diesem Weiterbildungsvorschlag liegt nach einem Aspekt der Gedanke zugrunde, dass der Fahrer, sofern er sich entsprechenden den Verkehrsregeln vorschriftsmäßig verhält, einen beabsichtigten Überholvorgang zuerst durch Setzen eines Blinkersignals den übrigen Verkehrsteilnehmern, insbesondere dem vorausfahrenden, zu überholenden Verkehrsteilnehmer und auch einem ggf. nachfolgenden Verkehrsteilnehmer, ankündigt und erst nach Setzen des Blinksignals durch aktives Rückschalten oder durch Durchtreten des Fahrpedals den Überholvorgang tatsächlich einleitet.

Diese an sich an die anderen Verkehrsteilnehmer gegebene Information, die durch einen Sensor oder eine Steuerung registriert und an die Steuereinrichtung weitergegeben werden könnte, kann die Steuereinrichtung auswerten und hieraus eine gestiegene Wahrscheinlichkeit für einen in Kürze erfolgenden Rückschaltbefehl zu einem niedrigeren Gang ableiten und einen entsprechenden niedrigeren Gang als potentiellen Zielgang einlegen, um so spontan auf den erwarteten Rückschaltbefehl reagieren zu können.

Um beim Beispiel eines Überholmanövers zu bleiben, so wird ein solches in der Regel durch eine schnelle, vergleichsweise starke Lenkbewegung eingeleitet. Nach einem anderen Aspekt wird deshalb vorgeschlagen, die Lenkbewegungen des Fahrers entsprechend auszuwerten, um hieraus ggf. eine gestiegene Wahrscheinlichkeit für einen in Kürze erfolgenden Rückschaltbefehl zu einem niedrigeren Gang ableiten. Es wird vor allem daran gedacht, dass die Steuereinrichtung dafür ausgelegt ist, die erhöhte Wahrscheinlichkeit für das Herunterschalten auf Grundlage eines einen Mindestlenkwinkel übersteigenden Lenkwinkels oder/und auf Grundlage einer eine Mindestlenkwinkelgeschwindigkeit übersteigenden Lenkwinkelgeschwindigkeit zu erkennen.

Weiterbildend wird ferner vorgeschlagen, dass die Steuereinrichtung dafür ausgelegt ist, vermittels der der Kupplungseinrichtung zugeordneten Aktuatorik die der bisher nicht lastübertragenden Getriebeeingangswelle zugeordnete Kupplungsanordnung zur Vorbereitung der Überschneidungsschaltung teilweise, vorzugsweise bis zum Erreichen einer Reibgrenze, einzurücken. Die betreffende Kupplungsanordnung kann beispielsweise so weit eingerückt werden, dass sie gerade ein geringfügiges oder gerade noch kein Moment überträgt. Durch dieses "vorbereitende" Einrücken der Kuppiungsanordnung kann bei einem Rückschaltbefehl sofort reagiert und die Überschneidungsschaltung vorgenommen werden, ohne erst die dem Zielgang zugeordnete Kupplungsanordnung in eine "Startposition" bringen zu müssen.

Es kann vorteilhaft vorgesehen sein, dass die Steuereinrichtung dafür ausgelegt ist, auf Grundlage von momentanen oder/und vorangehenden Fahrzuständen oder/und auf Grundlage von Navigationsdaten oder/und auf Grundlage von von der Betätigung durch einen Fahrer abhängigen Betätigungszuständen oder/und auf Grundlage von Zuständen des Getriebes oder/und der Antriebseinheit oder/und der Kupplungseinrichtung oder/und auf Grundlage von sonstigen Zuständen des Kraftfahrzeugs die Zulässigkeit oder Sinnhaftigkeit des Einlegens eines gegenüber dem Ausgangsgang niedrigeren Zielgangs zu überprüfen und einen entsprechenden Gang als potentieller Zielgang in Reaktion auf das Setzen des Blinksignals bzw. in Reaktion auf die die Mindestbetätigung übersteigende Lenkbetätigung nur im Bejahungsfall einzulegen. Hierdurch können diverse Umstände berücksichtigt werden. Beispielsweise sollte die Steuereinrichtung das Einlegen eines niedrigeren Ganges nur dann zulassen, wenn bei einer Rückschaltung Drehzahlgrenzen, etwa der Antriebseinheit (des Motors), nicht überschritten werden.

Ferner kann die Steuereinrichtung entsprechend den Vorschlägen in der genannten Patentschrift DE 199 37 716 C1 ausgelegt sein. Die Offenbarung dieser Patentschrift wird durch Bezugnahme vollständig in die Offenbarung der vorliegenden Anmeldung einbezogen.

Im Zusammenhang mit dem vorbereitenden Einlegen eines potentiellen Zielgangs ist es nach der Erfindung besonders bevorzugt, dass die Steuereinrichtung dafür ausgelegt ist, vermittels der dem Getriebe zugeordneten oder zugehörigen Aktuatorik den potentiellen Zielgang im Sinne einer ersten Schaltanforderung mit einer niedrigeren Schaltkraft bzw. einem Schaltkraftverlauf mit niedrigeren Schaltkräften einzulegen.

Es wird in der Praxis zumindest gelegentlich vorkommen, dass der dann tatsächlich benötigte Zielgang nicht dem schon eingelegten potentiellen Zielgang entspricht. In diesem Falle muss der vorsorglich schon eingelegte Gang wieder ausgelegt und dann der "richtige" Zielgang eingelegt werden, was eine entsprechende Verlängerung der Schaltzeiten zur Folge hat. Um diese Schaltzeiten im Rahmen zu halten, kann vorteilhaft vorgesehen sein, dass die Steuereinrichtung dafür ausgelegt ist, bei Auftreten einer Schaltanforderung, nach der ein vom eingelegten potentiellen Zielgang verschiedener Zielgang einzulegen ist, vermittels der dem Getriebe zugeordneten oder zugehörigen Aktuatorik den eingelegten potentiellen Zielgang im Sinne einer zweiten Schaltanforderung mit einer höheren Schaltkraft bzw. einem Schaltkraftverlauf mit höheren Schaltkräften auszulegen und vermittels der dem Getriebe zugeordneten oder zugehörigen Aktuatorik den der aufgetretenen Schaltanforderung entsprechenden Zielgang im Sinne einer zweiten Schaltanforderung mit einer höheren Schaltkraft bzw. einem Schaltkraftverlauf mit höheren Schaltkräften einzulegen. Hierbei kann aber durchaus auch noch eine Unterscheidung zwischen "eiligen", beispielsweise unmittelbar durch ein Agieren des Fahrers ausgelösten Schaltanforderungen und weniger "eiligen", beispielsweise nicht auf ein Agieren des Fahrers zurückgehenden Schaltanforderungen getroffen werden, um die höheren Schaltkräfte bzw. die Schaltkraftverläufe mit höheren Schaltkräften nur dann anzuwenden, wenn es sich um "eilige" Schaltanforderungen handelt.

Nach der Durchführung einer Überschneidungsschaltung wird zum Auslegen des Ausgangsgangs, sofern dieser überhaupt ausgelegt werden soll, in der Regel genügend Zeit zur Verfügung stehen. Dementsprechend wird vorgeschlagen, dass die Steuereinrichtung dafür ausgelegt ist, nach Durchführung einer/der Überschneidungsschaltung, bei der in Zuordnung zu einer momentan lastübertragenden der Getriebeeingangswellen ein Ausgangsgang und in Zuordnung zu einer momentan nicht lastübertragenden der Getriebeeingangswellen ein Zielgang gleichzeitig eingelegt sind und dann die der bisher lastübertragenden Getriebeeingangswelle zugeordnete Kupplungsanordnung im Sinne eines Ausrückens und die der bisher nicht lastübertragenden Getriebeeingangswellezugeordnete Kupplungsanordnung im Sinne eines Einrückens betätigt wird, vermittels der dem Getriebe zugeordneten oder zugehörigen Aktuatorik den Ausgangsgang im Sinne einer ersten Schaltanforderung mit einer niedrigeren Schaltkraft bzw. einem Schaltkraftverlauf mit niedrigeren Schaltkräften auszulegen.

Die Steuereinrichtung kann vorteilhaft dafür ausgelegt sein, bei stillstehendem Kraftfahrzeug oder/und bei Fahrzuständen des Kraftfahrzeugs mit einer einen Schwellenwert nicht übersteigenden Fahrzeuggeschwindigkeit alle auftretenden Schaltanforderungen als erste Schaltanforderungen zu identifizieren oder/und die auftretenden Schaltanforderungen auf Sinnhaftigkeit zu überprüfen und nur für als sinnvoll identifzierte Schaltanforderungen einen betreffenden Getriebegang einzulegen bzw. einen betreffenden Getriebegang auszulegen.

Es wird beispielsweise daran gedacht, unsinnige Schaltanforderungen etwa bei stehendem Fahrzeug gänzlich zu ignorieren. In der Regel wird es sinnvoll sein, nur Schaltungen in Anfahrgänge zuzulassen und alle anderen Schaltanforderungen zu ignorieren. Soweit Schaltanforderungen sinnvoll sind, wird es in der Regel ausreichen, diese mit geringen Schaltkräften durchzuführen.

Unsinnige Schaftenforderungen können beispielsweise dann auftreten, wenn etwa ein gelangweilter Fahrer während einer Wartezeit an einer Ampel mutwillig an den Schaltwippen oder dergleichen herumspielt, beispielsweise im Takt der Musik aus einem eingeschalteten Autoradio. Wilde, unkoordinierte Schaltungen im Getriebe können nach dem Weiterbildungsvorschlag unterbunden werden. Solche unkoordinierten Schaltungen werden zwar nicht unbedingt die Synchronisiereinrichtungen stark verschleißen lassen, da die Getriebewellen bei stehendem Fahrzeug nicht drehen. Aufgrund der Schaltkräfte können aber andere Komponenten, etwa Schaltgabeln, Muffen usw., unnötig belastet werden.

Es wurde zumindest impliziert schon angedeutet, dass die Steuereinrichtung dafür ausgelegt sein kann, in Abhängigkeit von Eingangsdaten Gangwechsel vermittels der dem Getriebe zugeordneten oder zugehörigen Aktuatorik vollautomatisch oder automatisiert durchzuführen. Diesbezüglich kann vorgesehen sein, dass die Steuereinrichtung einen Vollautomatik-Modus bereitstellt, in dem die Gangwechsel vollautomatisch in Abhängigkeit von Fahrzuständen oder/und Betriebszuständen des Fahrzeugs durchgeführt werden. Ferner kann die Steuereinrichtung einen Manuell-Modus bereitstellen, in dem die Gangwechsel in Abhängigkeit von vermittels einer Bedienanordnung durch den Fahrer gegebenen Schaltbefehlen durchgeführt werden.

Die Erfindung betrifft ferner ein Verfahren zum Schalten eines Mehrfachkupplungsgetriebes, insbesondere Doppelkupplungsgetriebes. Es wird vorgeschlagen, dass auftretenden ersten Schaltanforderunangen auf Grundlage von Eingangsdaten oder/und Betriebszuständen des Getriebes oder/und Betriebszuständen der Kupplungseinrichtung oder/und Betriebszuständen der Antriebseinheit oder/und Fahrzuständen des Kraftfahrzeugs niedrige Schaltkräfte bzw. Schaltkraftverläufe mit niedrigeren Schaltkräften zugeordnet werden und zweiten Schaltanforderungen höhere Schaltkräfte bzw. Schaltkraftverläufe mit höheren Schaltkräften zugeordnet werden und vermittels der dem Getriebe zugeordneten oder zugehörigen Aktuatorik (56) betreffende Gänge mit der jeweils zugeordneten Schaltkraft bzw. dem jeweils zugeordneten Schaltkraftverlauf eingelegt oder/und betreffende Gänge mit der jeweils zugeordneten Schaltkraft bzw. dem jeweils zugeordneten Schaltkraftverlauf ausgelegt werden, wobei die ersten Schaltanforderungen solche Schaltanforderungen umfassen, die nicht in unmittelbarer Reaktion auf eine Einwirkung des Fahrers auf eine Bedienanordnung des Fahrzeugs auftreten und die zweiten Schaltanforderungen solche Schaltanforderungen umfassen, die in unmittelbarer Reaktion auf eine Einwirkung des Fahrers auf eine Bedienanordnung des Fahrzeugs auftreten.

Die Erfindung wird im Folgenden anhand von in den Figuren veranschaulichten Ausführungsbeispielen näher erläutert.
- Fig. 1: zeigt schematisch einen Kraftfahrzeug-Antriebsstrang mit einer Lamellen-Doppelkupplung und einem Lastschaltgetriebe, der eine erfindungsgemäße Steuereinheit aufweist.
- Fig. 2: zeigt schematisch eine Abwandlung des Antriebsstrangs gemäß Fig. 1, nach der statt einer nasslaufenden Lamellen-Doppelkupplung eine trockenlaufende Doppelkupplung der Reibscheibenbauart vorgesehen ist.
- Fig. 3: zeigt ein exemplarisches Flussdiagramm betreffend die Zuordnung von kleineren und größeren Schaltkräften zu Schaltanforderungen.
- Fig. 4: zeigt eine Variante des Flussdiagramms der Fig. 3.

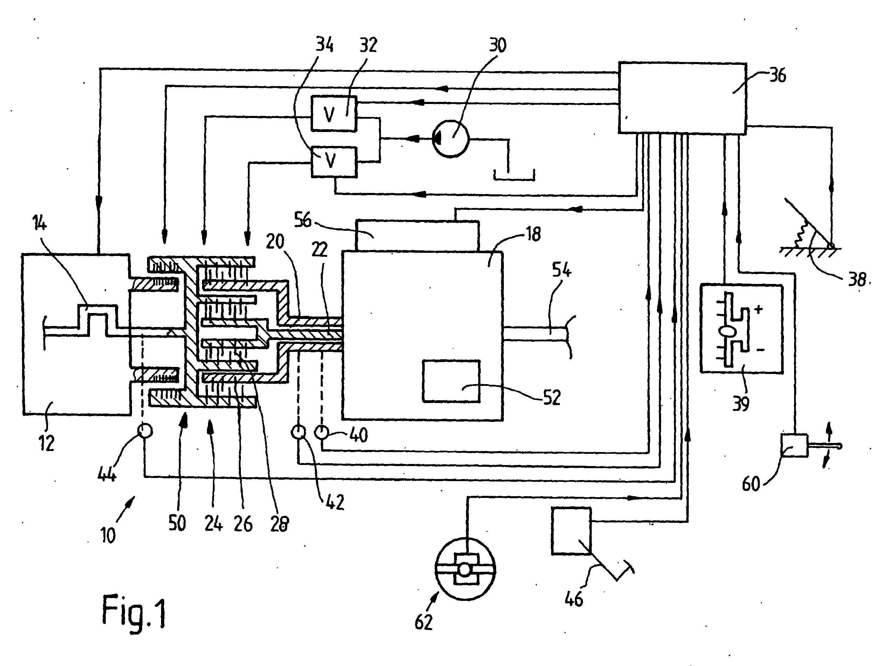

Fig. 1 zeigt ein Beispiel für einen Antriebsstrang 10 eines Kraftfahrzeugs. Der Antriebsstrang weist eine Antriebseinheit 12 in Form einer Brennkraftmaschine, speziell eines Verbrennungsmotors auf, wie durch eine symbolhaft gezeichnete Kurbelwelle 14 angedeutet ist. Ein so genanntes Lastschaltgetriebe 18 mit zwei radial geschachtelten Getriebeeingangswellen 20 und 22 ist über eine Doppelkupplung 24 mit dem Motor 12 verbunden. Die Doppelkupplung 24 umfasst zwei Kupplungsanordnungen 26 und 28, von denen die eine der Getriebeeingangswelle 20 und die andere der Getriebeeingangswelle 22 zugeordnet ist. Beim Ausführungsbeispiel handelt es sich um nasslaufende Lamellen-Kupplungsanordnungen, die vermittels eines jeweiligen, in die Doppelkupplung integrierten hydraulischen Nehmerzylinders (nicht dargestellt) auf hydraulischem Wege betätigbar sind. Eine entsprechende Hydraulikpumpe 30 ist schematisch dargestellt. Ein der Doppelkupplung zugeordneter Kühlölkreislauf mit einer Kühlölpumpe usw. ist nicht dargestellt. Geeignete Doppelkupplungskonstruktionen sind beispielsweise aus der DE 100 04 179 A1 bekannt.

Die Betätigung der beiden Kupplungsanordnungen erfolgt unter Vermittlung von Steuerventilen 32 und 34, die von einer Steuereinheit 36 elektrisch ansteuerbar sind. Die Steuereinheit empfängt Eingangssignale von einem Gaspedal 38, einer Gang-Wähl- oder/und Beeinflussungseinheit 39, einem der Getriebeeingangswelle 20 zugeordneten Drehzahlsensor 40, einem der Getriebeeingangswelle 22 zugeordneten Drehzahlsensor 42 und einem der Motorabtriebswelle (Kurbelwelle 14) zugeordneten Drehzahlsensor 44. Die Steuereinheit kann ferner weitere Signale und Messwerte von anderen Sensoren und Signalgebern erhalten, etwa einem Fahrzeuggeschwindigkeitssensor, einem Lenkwinkelsensor, einem Bremsbetätigungszustandssensor (etwa des in Fig. 1 gezeigten Bremspedals 46) usw..

Durch Vergleich der Drehzahl des Drehzahlsensors 44 einerseits und der Drehzahl des Drehzahlsensors 40 bzw. 42 andererseits kann die Steuereinheit einen Schlupfzustand der Kupplungsanordnung 26 bzw. der Kupplungsanordnung 28 bestimmen. Die Steuereinheit 36 steuert ein Leistungsstellglied des Motors 22 an, um die vom Motor abgegebene Leistung bzw. das vom Motor abgegebene Moment einzustellen.

In Fig. 1 ist ein Kurbelwellenstartergenerator 50 dargestellt, der eine am Motor 12 angeordnete Statoranordnung und eine an der Eingangsseite der Doppelkupplung 24 angeordnete Rotoranordnung aufweist. Der Kurbelwellenstartergenerator 50 wird durch die Steuereinheit 36 aktiviert, insbesondere um den Motor 12 anzulassen.

Zum auch als Doppelkupplungsgetriebe bezeichenbaren Lastschaltgetriebe 18 ist noch anzumerken, dass es sich bevorzugt um ein voll synchronisiertes Getriebe mit einer entsprechenden Synchronisiereinrichtung 52 handelt. Bei der Synchronisiereinrichtung 52 braucht es sich nicht um eine zentrale Synchronisiereinrichtung für das ganze Getriebe handeln. Die Synchronisiereinrichtung kann auch von herkömmlichen Synchronisiermitteln, etwa in Form von Synchronringen, gebildet sein. Eine Abtriebswelle des Getriebes ist mit 54 bezeichnet. Das Getriebe wird vorzugsweise vollautomatisiert mittels einer von der Steuereinheit 36 entsprechend ansteuerbaren Betätigungseinrichtung 56 betätigt. Mittels der Gang-Wahl- oder/und Beeinflussungseinheit 39 kann der Fahrer die Steuereinheit 36 anweisen, zu einem niedrigeren Gang herunterzuschalten oder zu einem höheren Gang hochzuschalten. In einem Vollautomatik-Modus schaltet die Steuereinheit selbsttätig in Abhängigkeit von Fahr- und Betriebszuständen des Fahrzeugs.

Das Schalten zwischen einem Ausgangsgang und einem Zielgang erfolgt in der Regel im Wege einer so genannten "Überschneidungsschaltung", die davon ausgeht, dass neben dem momentan lastübertragenden Ausgangsgang in Zuordnung zur anderen, momentan nicht lastübertragenden Getriebeeingangswelle der Zielgang schon eingelegt ist, wobei die der nicht lastübertragenen Getriebeeingangswelle zugeordnete Kupplungsanordnung ausgerückt ist. Während der Überschneidungsschaltung werden dann die momentan lastübertragende, dem Ausgangsgang zugeordnete Kupplungsanordnung im Sinne eines Ausrückens und die dem Zielgang zugeordnete Kupplungsanordnung im Sinne eines Einrückens aufeinander abgestimmt betätigt, um das Antriebsmoment der Antriebseinheit von der dem Ausgangsgang zugeordneten Getriebeeingangswelle und damit vom Ausgangsgang zur dem Zielgang zugeordneten Getriebeeingangswelle und damit zum Zielgang zu verlagern.

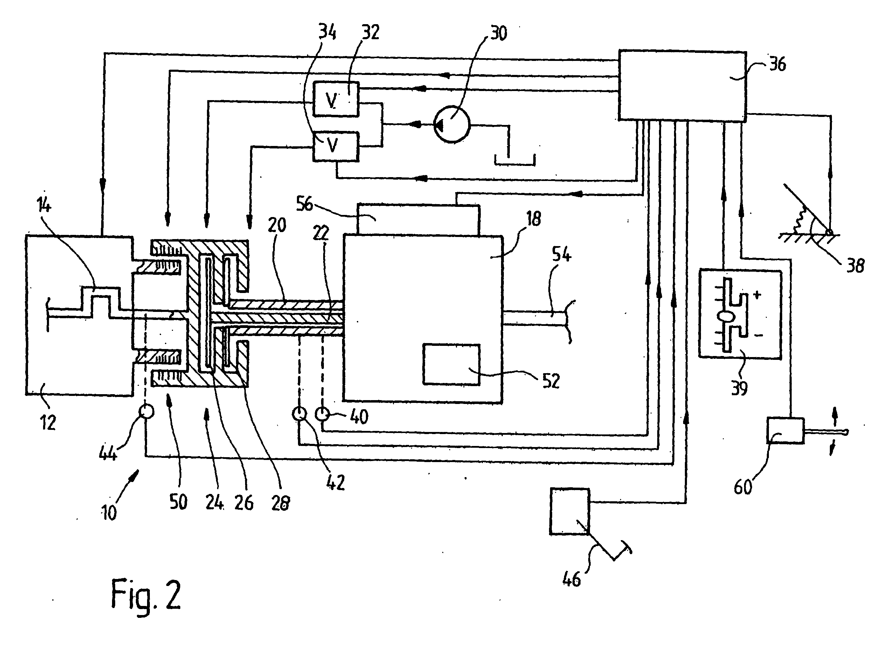

Fig. 2 zeigt ein weiteres Beispiel für einen Antriebsstrang 10 eines Kraftfahrzeugs. Es werden nur die Änderungen gegenüber dem Antriebsstrang gemäß Fig. 1 erläutert. Anstelle einer Doppelkupplung 24 mit zwei nasslaufenden Lamellen-Kupplungsanordnungen 26 und 28 ist beim Beispiel der Fig. 2 eine Doppelkupplung 24 mit zwei trockenlaufenden Kupplungsanordnungen 26 und 28 der Reibscheibenbauart vorgesehen. Die beiden Reibscheiben-Kupplungsanordnungen können beispielsweise mittels in die Doppelkupplung integrierten hydraulischen Nehmerzylindern auf hydraulischem Wege betätigbar sein, wovon in Fig. 2 ausgegangen ist. Entsprechende Realisierungsmöglichkeiten sind beispielsweise aus der DE 35 26 630 A1 entnehmbar. Es können aber auch völlig anders konstruierte trockenlaufende Doppelkupplungen eingesetzt werden, es wird beispielsweise auf die EP 0 931 951 A1 verwiesen.

Wird auf einen manuell mittels der Einheit 39 gegebenen Schaltbefehl bzw. auf die im Vollautomatik-Modus durch die Steuereinheit 36 getroffene Entscheidung zum Schalten im Wege einer Überschneidungsschaltung erst noch der Zielgang eingelegt, kommt es zu den Fahrkomfort unter Umständen merklich beeinträchtigenden Verzögerungen. Die Steuereinheit 36 ist deswegen vorzugsweise mit einer Gangprognostizierfunktionalität ausgeführt, die in Abhängigkeit von Eingangsdaten einen wahrscheinlichen Zielgang vorhersagt und diesen in Vorbereitung einer erwarteten Überschneidungsschaltung schon einlegt, obwohl mittels der Einheit 39 noch kein Schaltbefehl gegeben ist bzw. im Vollautomatik-Modus eine Entscheidung zum Schalten noch nicht gefällt ist. Die Steuereinheit 36 kann insoweit entsprechend der in der DE 199 37 716 C1 vorgeschlagenen Gangprognostizier- und Gangvorwahleinrichtung ausgeführt sein und diverse Betriebsdaten als Eingangsdaten verarbeiten. Es wird auf die Offenbarung der DE 199 37 716 C1 verwiesen, die durch Bezugnahme vollständig in die Offenbarung der vorliegenden Patentanmeldung einbezogen wird.

Im Hinblick auf die Vorbereitung eines Herunterschaltens zu einem niedrigeren Gang ist die Steuereinheit 36 vorzugsweise speziell dafür ausgelegt, eine erhöhte Wahrscheinlichkeit für ein Herunterschalten zu einem gegenüber dem Ausgangsgang niedrigeren Zielgang auf Grundlage des Setzens eines Blinksignals zu erkennen und einen entsprechenden Gang als potentiellen Zielgang vermittels der Betätigungseinrichtung 56 einzulegen. Ferner ist die Steuereinrichtung nach einer bevorzugten Ausführungsform dafür ausgelegt, durch entsprechende Betätigung der Ventilanordnung 32, 34 zur Vorbereitung der Überschneidungsschaltung die dem vorsorglich schon eingelegten Zielgang zugeordnete, bisher nichtlastübertragende Kupplungsanordnung teilweise einzurücken, vorzugsweise bis zum Erreichen einer Reibgrenze, so dass auf einen Schaltbefehl bzw. auf die Entscheidung, einen Schaltvorgang auszulösen, unmittelbar, d. h. ohne Zeitverzögerung, die Überschneidungsschaltung durchgeführt werden kann.

Betreffend das vorsorgliche Einlegen eines gegenüber dem momentan lastübertragenden Gang (dem Ausgangsgang) niedrigeren potentiellen Zielgang auf Grundlage des Setzens eines Blinksignals ist bei den Ausführungsbeispielen der Fig. 1 und 2 vorgesehen, dass ein entsprechendes Blinkeransteuersignal von einem Blinkerschalter 60 alleine oder zusätzlich zur Steuereinheit 36 zugeführt wird. Betätigt der Fahrer zur Ankündigung eines Überholmanövers den Blinkerschalter 60, so kann die Steuereinheit 36 auf Grundlage des ihr zugeführten Blinkeransteuersignals die erhöhte Wahrscheinlichkeit für ein bevorstehendes Schalten zu einem niedrigeren Zielgang erkennen und in Reaktion hierauf den betreffenden niedrigeren Gang (den potentiellen Zielgang) einlegen.

Es ist durchaus sinnvoll, generell auf die Betätigung des Blinkerschalters durch den Fahrer hin von einer erhöhten Wahrscheinlichkeit des Einlegens eines gegenüber dem momentanen Gang niedrigeren Zielgangs auszugehen. Auch bei Abbiegevorgängen, die vorschriftsgemäß durch ein entsprechendes Blinksignal angekündigt werden sollten, wird in der Regel entweder der momentane Gang beibehalten oder zu einem niedrigeren Gang geschaltet.

Alternativ oder zusätzlich kann die Steuereinheit 36 eine erhöhte Wahrscheinlichkeit für ein bevorstehendes Schalten zu einem niedrigeren Zielgang auf Grundlage von Lenkbewegungen erkennen und in Reaktion hierauf den betreffenden niedrigeren Gang (den potentiellen Zielgang) einlegen. Gemäß Fig. 1 (entsprechendes kann auch für das Ausführungsbeispiel der Fig. 2 vorgesehen sein) empfängt die Steuereinheit 36 Signale von einer Fahrzeug-Lenkvorrichtung 62. Es könnte beispielsweise vorgesehen sein, dass ein momentaner Lenkwinkel bzw. Änderungen des momentanen Lenkwinkels (eventuell eine Lenkwinkelgeschwindigkeit) durch einen entsprechenden Sensor erfasst und in Form entsprechender Signale der Steuereinheit 36 zugeführt werden. Da insbesondere Überholmanöver in der Regel durch ein ausgeprägtes Lenkmanöver eingeleitet werden, lässt sich hieraus mit recht hoher Trefferquote die Wahrscheinlichkeit für ein bevorstehendes Schalten zum niedrigeren Zielgang zwecks Erzielung einer hohen Fahrzeugbeschleunigung erkennen.

Die Steuereinheit kann noch diverse weitere Eingangsdaten bei ihrer Prognose eines jeweiligen Zielgangs berücksichtigen. Dabei kann die Steuereinheit die Zulässigkeit oder Sinnhaftigkeit des Einlegens eines an sich prognostizierten Zielgangs überprüfen und ggf. trotz einer an sich vorliegenden Prognose, dass ein bestimmter Zielgang wahrscheinlich demnächst aktiviert werden soll, von der vorsorglichen Einlegung dieses Gangs als potentiellen Zielgang absehen. Diese Überprüfung auf Zulässigkeit oder Sinnhaftigkeit kann insbesondere auch in Bezug auf einen gegenüber dem Ausgangsgang niedrigeren Zielgang erfolgen, beispielsweise um zu gewährleisten, dass bei einer Rückschaltung Drehzahlgrenzen (etwa der vorzugsweise als Verbrennungsmotor ausgeführten Antriebseinheit) nicht überschritten werden.

Die Steuereinheit 36 ist erfindungsgemäß dafür ausgelegt, in Abhängigkeit von Eingangsdaten oder/und Betriebszuständen des Getriebes oder/und Betriebszuständen der Kupplungseinrichtung oder/und Betriebszuständen der Antriebseinheit oder/und Fahrzuständen des Kraftfahrzeugs auftretenden Schaltanforderungen unterschiedliche Schaltkräfte oder Schaltkraftverläufe zuzuordnen und vermittels der Getriebeaktuatorik (Ventile 32, 34 und den Kupplungsanordnungen zugeordnete hydraulische Nehmerzylinder) betreffende Gänge mit der jeweils zugeordneten Schaltkraft bzw. dem jeweils zugeordneten Schaltkraftverlauf einzulegen oder/und betreffende Gänge mit der jeweils zugeordneten Schaltkraft bzw. dem jeweils zugeordneten Schaltkraftverlauf auszulegen. In der Regel wird es ausreichend sein, zwischen ersten oder "weniger eiligen" Schaltanforderungen und zweiten oder "eiligeren" Schaltanforderungen zu unterscheiden und den ersten oder "weniger eiligen" Schaltanforderungen niedrige Schaltkräfte bzw. Schaltkraftverläufe mit niedrigen Schaltkräften zuzuordnen und den zweiten oder "eiligeren" Schaltanforderungen höhere Schaltkräfte bzw. Schaltkraftverläufe mit höheren Schaltkräften zuzuordnen.

Bei Schaltungen in einem Vollautomatik-Modus der Steuereinheit 36, bei denen der Fahrer zwar Getriebeschaltungen erwartet, aber deren genauen Zeitpunkt nicht weiß, reagiert die Steuereinheit 36 auf Betriebskenndaten wie ansteigende oder abfallende Motor- oder/und Getriebedrehzahl. Die Steuereinheit kann dann den nächsten zu schaltenden Gang mit relativ niedrigen Schaltkräften einlegen. Dass die relativ niedrigen Schaltkräfte eine entsprechend längere Schaltdauer bedingen, wird vom Fahrer nicht als Zeitverzögerung empfunden, da der Fahrer ja nicht weiß, wann der Schaltbefehl gegeben wurde. Durch die niedrigeren Schaltkräfte werden die Synchronisiereinrichtungen des Getriebes geschont.

Eine Variation der Schaltkräfte bei unterschiedlichen Automatik-Modi ist im Prinzip im Rahmen der Erfindung möglich, aber zumindest bei Überschneidungsschaltungen nicht unbedingt erforderlich, da es bei der Überschneidungsschaltung keine Zugkraftunterbrechung gibt.

Es können allerdings auch in einem Vollautomatik-Modus unerwartete Schaltanforderungen auftreten, bei denen der Fahrer eine sofortige Reaktion des Fahrzeugs erwartet, so z. B. bei einem Kick-Down des Fahrpedals. Ist entsprechend den obigen Vorschlägen schon der benötigte Gang als "potentieller Zielgang" vorsorglich eingelegt worden, so braucht nur noch die Überschneidungsschaltung durchgeführt werden.

Im Falle eines nicht vorhergesehenen oder falsch vorhergesehenen Schaltwunsches des Fahrers wird hingegen kein oder ein falscher (betreffend das Beispiel "Kick-Down" ein höherer) Gang auf der anderen, momentan nicht lastübertragenen Getriebewelle eingelegt sein. Es muss dann im ersteren Falle zuerst der falsche Gang ausgelegt werden, bevor dann, wie auch im zweiten Fall, der richtige Gang eingelegt werden muss, damit anschließend eine Überschneidungsschaltung stattfinden kann. Gleiches gilt für Ausführungsformen, bei denen keine vorsorgliche Einlegung von Getriebegängen auf Grundlage von Vorhersagen oder Wahrscheinlichkeiten vorgesehen ist. In Bezug auf derartige Schaltanforderungen wird vorgeschlagen, höhere Schaltkräfte anzuwenden, um den richtigen Gang schnell einzulegen. Falls zuvor ein anderer, falscher Gang ausgelegt werden muss, sollte dieses ebenfalls möglichst schnell erfolgen und es sollte eine dementsprechend hohe Schaltkraft (Ausrückkraft) eingesetzt werden.

Soweit potentielle Zielgänge vorsorglich eingelegt werden, kann dies hingegen mit niedrigen Schaltkräften geschehen, da momentan ja noch überhaupt keine Überschneidungsschaltung unmittelbar ansteht.

Bei Schaltungen in einem manuellen Modus könnten bezogen auf die beiden Ausführungsbeispiele der Fig. 1 und 2 vor allem zwei Arten von Schaltungen unterschieden werden, bei denen der Kraftfluss von der einen auf die andere Getriebewelle geschaltet wird. Zum einen werden Schaltungen auftreten, bei denen der zu schaltende Gang erst auf der anderen Getriebewelle eingelegt werden muss, da entweder kein oder der falsche Gang eingelegt ist. Ferner werden Schaltungen auftreten, bei denen bereits vor dem Schaltwunsch des Fahrers auf Grundlage einer entsprechenden Vorhersage vorsorglich der richtige Gang (der potentielle Zielgang) auf der anderen Getriebewelle eingelegt ist.

Wie schon im Bezug auf den Vollautomatik-Modus erwähnt, sollten vorsorgliche Schaltungen zu einem "potentiellen Zielgang", die durch die "Gangprognostiziereinrichtung" ohne akuten Schaltwunsch vorgenommen werden, mit niedrigen Schaltkräften durchgeführt werden, da im Hinblick auf Erwartungen des Fahrers mangels akuten Schaltwunsch keine besondere Eile besteht. Schaltanforderungen des Fahrers, bei denen der gewählte Gang erst eingelegt und ggf. sogar erst noch ein falscher Gang ausgelegt werden muss, sollten hingegen mit vergleichsweise hoher Schaltkraft getätigt werden, um den akuten Schaltwunsch des Fahrers so schnell wie möglich zu bedienen. In einem manuellen Modus sind die Schaltwünsche des Fahrers gegenüber potentiellen Schaltanforderungen in einem Automatikmodus deutlich weniger gut vorhersagbar, so dass im Vergleich zum Automatikmodus mehr Schaltanforderungen stattfinden dürften, bei denen kein oder ein falscher Gang auf der anderen Getriebeeingangswelle eingelegt ist.

Sowohl im Vollautomatikmodus als auch im manuellen Modus kann vorgesehen sein, dass innerhalb einer Schaltung unterschiedliche variable Schaltkräfte eingesetzt werden (vgl. DE 195 26 273 C2).

Werden nach den vorangehenden Vorschlägen hohe Schaltkräfte nur bei Bedarf zum Ein- oder Auslegen der Gänge angewandt und ansonsten vergleichsweise niedrige Schaltkräfte verwendet, so wird der insgesamt auftretende Verschleiß an den Synchronisiereinrichtungen des Getriebes minimiert, und zwar unter der Randbedingung, dass die subjektive Reaktionsgeschwindigkeit des Systems aus Sicht des Fahrers nicht oder nicht wesentlich verschlechtert ist. Bei eine entsprechende Größe aufweisenden "größeren Schaltkräften" reagiert das System aus Sicht des Fahrers hinreichend schnell. Die "größeren Schaltkräfte" können selbst auch ein Kompromiss zwischen Schaltgeschwindigkeit einerseits und Belastung der Synchronisiereinrichtungen andererseits darstellen. Aufgrund der niedrigeren Belastungen der Synchronisiereinrichtungen durch die "schwächeren Schaltkräfte" kann in diesem Kompromiss das Gewicht aber etwas stärker auf die kürzeren Schaltzeiten gelegt werden.

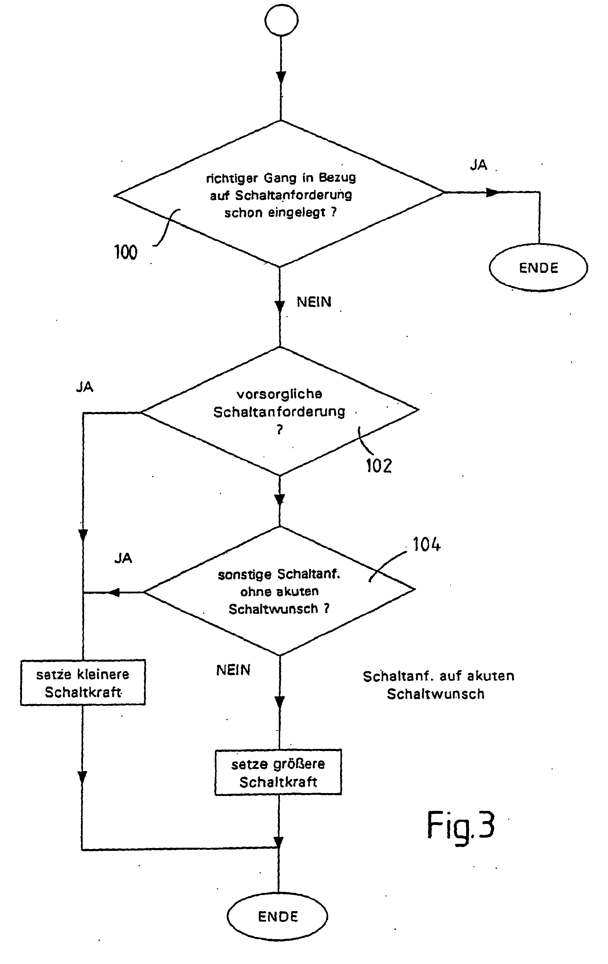

Fig. 3 zeigt ein Beispiel für ein Flussdiagramm einer Routine oder eines Teils einer Routine, die in der Steuereinheit 36 abläuft und Schaltanforderungen eine jeweilige Schaltkraft zuordnet. Die Schaltanforderungen können neben dem Einlegen von Gängen auch das Auslegen von Gängen betreffen. Gemäß einer Raute 100 wird überprüft, ob im Bezug auf eine Schaltanforderung der richtige Gang schon eingelegt ist. Ist dies der Fall, so braucht betreffend das Getriebe gar nicht mehr geschaltet werden, sondern es ist nur noch die Überschneidungsschaltung durch entsprechende Betätigung der Kupplungsanordnungen durchzuführen. Die Routine kann damit schon beendet werden.

Gemäß Raute 102 wird überprüft, ob es sich um eine vorsorgliche Schaltanforderung handelt. Ist dies der Fall, so ist die Schaltanforderung nicht eilbedürftig und kann mit einer kleineren Schaltkraft durchgeführt werden. Handelt es sich um keine vorsorgliche Schaltanforderung, also um keine Schaltanforderung, die durch die Gangprognostizierfunktionalität der Steuereinheit 36 initiiert wird, so wird gemäß Raute 104 überprüft, ob es sich um eine sonstige Schaltanforderung ohne akuten Schaltwunsch durch den Fahrer handelt. Ist dies der Fall, so wird ebenfalls eine kleinere Schaltkraft gesetzt. Handelt es sich hingegen um eine Schaltanforderung auf akuten Schaltwunsch des Fahrers, so wird eine größere Schaltkraft gesetzt. Soweit zutreffend, wird die größere Schaltkraft einerseits als Ausrückkraft zum Auslegen eines falsch eingelegten potentiellen Zielgangs als auch als Einlegekraft zum Einlegen des dem Schaltwunsch entsprechenden Zielgangs eingesetzt.

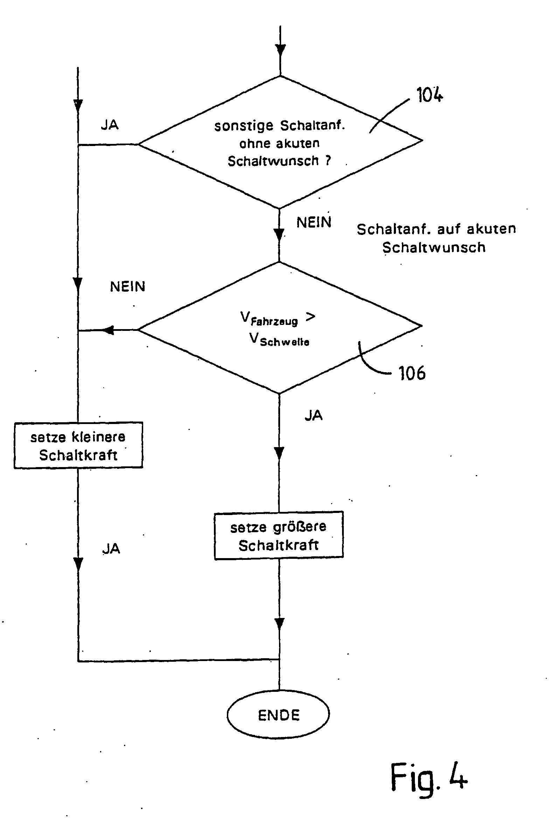

Gemäß dem Beispiel der Fig. 4 kann zusätzlich vorgesehen sein, dass die Fahrzeuggeschwindigkeit mit einer Schwellengeschwindigkeit verglichen wird (Raute 106), und dass nur für die Geschwindigkeitsschwelle übersteigende Fahrzeuggeschwindigkeiten die größere Schaltkraft gesetzt wird. In den Ablauf könnte auch noch eine Überprüfung auf grundsätzliche Zulässigkeit oder Sinnhaftigkeit von Schaltanforderungen integriert sein. Beispielsweise ist es in der Regel sinnvoll, bei stehendem Kraftfahrzeug nur Schaltungen in Anfahrgängen zuzulassen und weitere Schaltanforderungen zu ignorieren. Unnötiges Schalten des Getriebes aufgrund mutwilliger (spielerischer) Betätigung etwa von Schaltwippen durch den Fahrer (beispielsweise zum Zeitvertreib beim Warten an einer Ampel) lassen sich auf diese Weise zuverlässig unterbinden.

## Patentansprüche

1. Kraftfahrzeug mit einem Antriebsstrang, der eine Antriebseinheit (12), ein Getriebe (18) mit einer ersten und einer zweiten Getriebeeingangswelle und eine Mehrfach-Kupplungseinrichtung, insbesondere Doppel-Kupplungseinrichtung (24), mit einer der ersten Getriebeeingangswelle (20) zugeordneten ersten Kupplungsanordnung (26) und einer der zweiten Getriebeeingangswelle (22) zugeordneten zweiten Kupplungsanordnung (28) zur Momentenübertragung zwischen der Antriebseinheit und dem Getriebe aufweist, wobei eine Steuereinrichtung (36) und eine Aktuatorik (56) vorgesehen ist, wobei durch die Steuereinrichtung (36) vermittels die dem Getriebe zugeordneten oder zugehörigen Aktuatorik (56) in Zuordnung zu einer jeweiligen der ersten und der zweiten Getriebeeingangswelle Getriebegänge einlegbar und auslegbar und vermittels einer der Kupplungseinrichtung zugeordneten oder zugehörigen Aktuatorik (32, 34) die Kupplungsanordnungen betätigbar sind,
die dem Getriebe zugeordnete oder zugehörige Aktuatorik (56) dafür ausgelegt ist, variabel einstellbare Schaltkräfte auf Schaltelemente des Getriebes auszuüben, **dadurch gekennzeichnet, dass** die Steuereinheit (36) dafür ausgelegt ist, auftretenden ersten Schaltanforderungen auf Grundlage von Eingangsdaten oder/und Betriebszuständen des Getriebes oder/und Betriebszuständen der Kupplungseinrichtung oder/und Betriebszuständen der Antriebseinheit oder/und Fahrzuständen des Kraftfahrzeugs niedrige Schaltkräfte bzw. Schaltkraftverläufe mit niedrigeren Schaltkräften zuzuordnen und zweiten Schaltanforderungen höhere Schaltkräfte bzw. Schaltkraftverläufe mit höheren Schaltkräften zuzuordnen und vermittels der dem Getriebe zugeordneten oder zugehörigen Aktuatorik (56) betreffende Gänge mit der jeweils zugeordneten Schaltkraft bzw. dem jeweils zugeordneten Schaltkraftverlauf einzulegen oder/und betreffende Gänge mit der jeweils zugeordneten Schaltkraft bzw. dem jeweils zugeordneten Schaltkraftverlauf auszulegen, wobei die ersten Schaltanforderungen solche Schaltanforderungen umfassen, die nicht in unmittelbarer Reaktion auf eine Einwirkung des Fahrers auf eine Bedienanordnung des Fahrzeugs auftreten und die zweiten Schaltanforderungen solche Schaltanforderungen umfassen, die in unmittelbarer Reaktion auf eine Einwirkung des Fahrers auf eine Bedienanordnung des Fahrzeugs auftreten.

2. Kraftfahrzeug nach Anspruch 1, **dadurch gekennzeichnet, dass** die zweiten Schaltanforderungen solche Schaltanforderungen umfassen, die durch den Fahrer vermittels der/einer Bedienanordnung als akuter Schaltwunsch signalisiert werden.

3. Kraftfahrzeug nach einem der Ansprüche 1 oder 2, **dadurch gekennzeichnet, dass** die Steuereinrichtung (36) dafür ausgelegt ist, zur Vorbereitung einer Überschneidungsschaltung, bei der in Zuordnung zu einer momentan lastübertragenden der Getriebeeingangswellen ein Ausgangsgang und in Zuordnung zu einer momentan nicht lastübertragenden der Getriebeeingangswellen ein Zielgang gleichzeitig eingelegt sind und dann die der bisher lastübertragenden Getriebeeingangswelle zugeordnete Kupplungsanordnung im Sinne eines Ausrückens und die der bisher nicht lastübertragenden Getriebeeingangswelle zugeordnete Kupplungsanordnung im Sinne eines Einrückens betätigt wird, auf Grundlage von Eingangsdaten einen wahrscheinlichen Zielgang zu bestimmen und diesen in Zuordnung zur momentan nicht lastübertragenden Getriebeeingangswelle als potentiellen Zielgang zusätzlich zu einem In Zuordnung zur momentan lastübertragenden Getriebeeingangswelle eingelegten, den Ausgangsgang der vorzubereitenden Überschneidungsschaltung darstellenden Gang (im Folgenden als Ausgangsgang bezeichnet) einzulegen.

4. Kraftfahrzeug nach Anspruch 3, **dadurch gekennzeichnet, dass** die Steuereinrichtung (36) dafür ausgelegt ist, eine erhöhte Wahrscheinlichkeit für ein Herunterschalten zu einem gegenüber dem Ausgangsgang niedrigeren Zielgang auf Grundlage des Setzens eines Blinksignals oder/und auf Grundlage einer eine Mindestbetätigung übersteigenden Lenkbetätigung zu erkennen und einen entsprechenden Gang als potentiellen Zielgang vermittels der Aktuatorik (56) einzulegen.

5. Kraftfahrzeug nach Anspruch 4, **dadurch gekennzeichnet, dass** die Steuereinrichtung (36) dafür ausgelegt ist, die erhöhte Wahrscheinlichkeit für das Herunterschalten auf Grundlage eines einen Mindestlenkwinkel übersteigenden Lenkwinkels oder/und auf Grundlage einer eine Mindestlenkwinkeigeschwindigkeit übersteigenden Lenkwinkelgeschwindigkeit zu erkennen.

6. Kraftfahrzeug nach Anspruch 4 oder 5, **dadurch gekennzeichnet, dass** die Steuereinrichtung (36) dafür ausgelegt ist, vermittels der der Kupplungseinrichtung zugeordneten Aktuatorik (32, 34) die der bisher nicht lastübertragenden Getriebeeingangswelle zugeordnete Kupplungsanordnung (26 bzw. 28) zur Vorbereitung der Überschneidungsschaltung teilweise, vorzugsweise bis zum Erreichen einer Reibgrenze, einzurücken.

7. Kraftfahrzeug nach einem der Ansprüche 4 bis 6, **dadurch gekennzeichnet, dass** die Steuereinrichtung (36) dafür ausgelegt ist, auf Grundlage von momentanen oder/und vorangehenden Fahrzuständen oder/und auf Grundlage von Navigationsdaten oder/und auf Grundlage von von der Betätigung durch einen Fahrer abhängigen Betätigungszuständen oder/und auf Grundlage von Zuständen des Getriebes (18) oder/und der Antriebseinheit (12) oder/und der Kupplungseinrichtung (24) oder/und auf Grundlage von sonstigen Zuständen des Kraftfahrzeugs die Zulässigkeit oder Sinnhaftigkeit des Einlegens eines gegenüber dem Ausgangsgang niedrigeren Zielgangs zu überprüfen und einen entsprechenden Gang als potentieller Zielgang in Reaktion auf das Setzen des Blinksignals nur im Bejahungsfall einzulegen.

8. Kraftfahrzeug nach Anspruch 1 sowie nach einem der Ansprüche 3 bis 7. **dadurch gekennzeichnet, dass** die Steuereinrichtung (36) dafür ausgelegt ist, vermittels der dem Getriebe zugeordneten oder zugehörigen Aktuatorik (56) den potentiellen Zielgang im Sinne einer ersten Schaltanforderung mit einer niedrigeren Schaltkraft bzw. einem Schaltkraftverlauf mit niedrigeren Schaltkräften einzulegen.

9. Kraftfahrzeug nach Anspruch 1 sowie nach einem der Ansprüche 3 bis 8, **dadurch gekennzeichnet, dass** die Steuereinrichtung (36) dafür ausgelegt ist, bei Auftreten einer Schaltanforderung, nach der ein vom eingelegten potentiellen Zielgang verschiedener Zielgang einzulegen ist, vermittels der dem Getriebe zugeordneten oder zugehörigen Aktuatorik (56) den eingelegten potentiellen Zielgang im Sinne einer zweiten Schaltanforderung mit einer höheren Schaltkraft bzw. einem Schaltkraftverlauf mit höheren Schaltkräften auszulegen und vermittels der dem Getriebe zugeordneten oder zugehörigen Aktuatorik den der aufgetretenen Schaltanforderung entsprechenden Zielgang im Sinne einer zweiten Schaltanforderung mit einer höheren Schaltkraft bzw. einem Schaltkraftverlauf mit höheren Schaltkräften einzulegen.

10. Kraftfahrzeug nach einem der Ansprüche 1 bis 9, **dadurch gekennzeichnet, dass** die Steuereinrichtung (36) dafür ausgelegt ist, nach Durchführung einer/der Überschneidungsschaltung, bei der in Zuordnung zu einer momentan lastübertragenden der Getriebeeingangswellen ein Ausgangsgang und in Zuordnung zu einer momentan nicht lastübertragenden der Getriebeeingangswellen ein Zielgang gleichzeitig eingelegt sind und dann die der bisher lastübertragenden Getriebeeingangswelle zugeordnete Kupplungsanordnung im Sinne eines Ausrückens und die der bisher nicht lastübertragenden Getriebeeingangswelle zugeordnete Kupplungsanordnung im Sinne eines Einrückens betätigt wird, vermittels der dem Getriebe zugeordneten oder zugehörigen Aktuatorik (56) den Ausgangsgang im Sinne einer ersten Schaltanforderung mit einer niedrigeren Schaltkraft bzw. einem Schattkraftverlauf mit niedrigeren Schaltkräften auszulegen.

11. Kraftfahrzeug nach einem der Ansprüche 1 bis 10, **dadurch gekennzeichnet, dass** die Steuereinrichtung (36) dafür ausgelegt ist, bei stillstehendem Kraftfahrzeug oder/und bei Fahrzuständen des Kraftfahrzeugs mit einer einen Schwellenwert nicht übersteigenden Fahrzeuggeschwindigkeit alle auftretenden Schaltanforderungen als erste Schaltanforderungen zu identifizieren oder/und die auftretenden Schaltanforderungen auf Sinnhaftigkeit zu überprüfen und nur für als sinnvoll identifzierte Schaltanforderungen einen betreffenden Getriebegang einzulegen bzw. einen betreffenden Getriebegang auszulegen.

12. Kraftfahrzeug nach einem der Ansprüche 1 bis 11, **dadurch gekennzeichnet, dass** die Steuereinrichtung (36) dafür ausgelegt, in Abhängigkeit von Eingangsdaten Gangwechsel vermittels der dem Getriebe zugeordneten oder zugehörigen Aktuatorik (56) vollautomatisch oder automatisiert durchzuführen.

13. Kraftfahrzeug nach einem der Ansprüche 1 bis 12, **dadurch gekennzeichnet, dass** die Steuereinrichtung (36) einen Vollautomatik-Modus bereitstellt, in dem die Gangwechsel vollautomatisch in Abhängigkeit von Fahrzuständen oder/und Betriebszuständen des Fahrzeugs durchgeführt werden.

14. Kraftfahrzeug nach einem der Ansprüche 1 bis 13, **dadurch gekennzeichnet, dass** die Steuereinrichtung (36) einen Manuell-Modus bereitstellt, in dem die Gangwechsel in Abhängigkeit von vermittels einer Bedienanordnung (39) durch den Fahrer gegebenen Schaltbefehlen durchgeführt werden.

15. Verfahren zum Schalten eines Mehrfachkupplungsgetriebes, insbesondere Doppelkupplungsgetriebes (18), bei dem auftretenden ersten Schaltanforderungen auf Grundlage von Eingangsdaten oder/und Betriebszuständen des Getriebes oder/und Betriebszuständen der Kupplungseinrichtung oder/und Betriebszuständen der Antriebseinheit oder/und Fahrzuständen des Kraftfahrzeugs niedrige Schaltkräfte bzw. Schaltkraftverläufe mit niedrigeren Schaltkräften zugeordnet werden und zweiten Schaltanforderungen höhere Schaltkräfte bzw. Schaltkraftverläufe mit höheren Schaltkräften zugeordnet werden und vermittels der dem Getriebe zugeordneten oder zugehörigen Aktuatorik (56) betreffende Gänge mit der jeweils zugeordneten Schaltkraft bzw. dem jeweils zugeordneten Schaltkraftverlauf eingelegt oder/und betreffende Gänge mit der jeweils zugeordneten Schaltkraft bzw. dem jeweils zugeordneten Schaltkraftverlauf ausgelegt werden, wobei die ersten Schaltanforderungen solche Schaltanforderungen umfassen, die nicht in unmittelbarer Reaktion auf eine Einwirkung des Fahrers auf eine Bedienanordnung des Fahrzeugs auftreten und die zweiten Schaltanforderungen solche Schaltanforderungen umfassen, die in unmittelbarer Reaktion auf eine Einwirkung des Fahrers auf eine Bedierranordnung des Fahrzeugs auftreten.

## Claims

1. Motor vehicle comprising a drivetrain which has a drive unit (12), comprising a gearbox (18) having a first and a second gearbox input shaft, and comprising a multiple clutch device, in particular double clutch device (24), having a first clutch arrangement (26) assigned to the first gearbox input shaft (20), and a second clutch arrangement (28) assigned to the second gearbox input shaft (22), for transmitting torque between the drive unit and the gearbox, with a control device (36) and an actuator assembly (56) being provided, with it being possible for gearbox gears to be engaged and disengaged by the control device (36) by means of the actuator assembly (56) assigned or belonging to the gearbox in association with a respective one of the first and second gearbox input shafts, and for the clutch arrangements to be actuated by means of an actuator assembly (32, 34) assigned or belonging to the clutch device, with the actuator assembly (56) assigned or belonging to the gearbox being designed to exert variably adjustable shift forces on shift elements of the gearbox, **characterized in that** the control unit (36) is designed such that, on the basis of input data and/or operating states of the gearbox and/or operating states of the clutch device and/or operating states of the drive unit and/or driving states of the motor vehicle, said control unit assigns low shift forces or shift force profiles with low shift forces to occurring first shift demands and assigns relatively high shift forces or shift force profiles with relatively high shift forces to second shift demands, and said control unit, by means of the actuator assembly (56) assigned or belonging to the gearbox, engages relevant gears with the respectively assigned shift force or with the respectively assigned shift force profile and/or disengages relevant gears with the respectively assigned shift force or the respectively assigned shift force profile, with the first shift demands encompassing shift demands which do not occur as a direct reaction to an action of the driver on an operating arrangement of the vehicle, and with the second shift demands encompassing shift demands which occur as a direct reaction to an action of the driver on an operating arrangement of the vehicle.

2. Motor vehicle according to Claim 1, **characterized in that** the second shift demands encompass shift demands which are signalled by the driver by means of the/an operating arrangement as an acute shift demand.

3. Motor vehicle according to one of Claims 1 or 2, **characterized in that** the control device (36) is designed such that, in preparation for an overlap shift in which, in association with a presently load-transmitting one of the gearbox input shafts, an initial gear, and in association with a presently not load-transmitting one of the gearbox input shafts, a target gear, are simultaneously engaged and then the clutch arrangement assigned to the previously load-transmitting gearbox input shaft is actuated in the sense of a disengagement and the clutch arrangement assigned to the previously not load-transmitting gearbox input shaft is actuated in the sense of an engagement, said control device determines a probable target gear on the basis of input data and engages said probable target gear, in association with the presently not load-transmitting gearbox input shaft, as a potential target gear in addition to a gear which is engaged in association with the presently load-transmitting gearbox input shaft and which constitutes the initial gear (referred to hereinafter as the initial gear) of the overlap shift to be prepared.

4. Motor vehicle according to Claim 3, **characterized in that** the control device (36) is designed to detect an increased probability of a downshift to a lower target gear than the initial gear on the basis of the activation of a turn indicator signal and/or on the basis of a steering actuation exceeding a minimum actuation, and to engage a corresponding gear as a potential target gear by means of the actuator assembly (56).

5. Motor vehicle according to Claim 4, **characterized in that** the control device (36) is designed to detect the increased probability of the downshift on the basis of a steering angle exceeding a minimum steering angle and/or on the basis of a steering angle speed exceeding a minimum steering angle speed.

6. Motor vehicle according to Claim 4 or 5,
**characterized in that** the control device (36) is designed such that, by means of the actuator assembly (32, 34) assigned to the clutch device, said control device partially engages the clutch arrangement (26 or 28) assigned to the previously not load-transmitting gearbox input shaft, preferably until a friction threshold is reached, in preparation for the overlap shift.

7. Motor vehicle according to one of Claims 4 to 6, **characterized in that** the control device (36) is designed to check the admissibility or meaningfulness of the engagement of a lower target gear than the initial gear on the basis of present and/or previous driving states and/or on the basis of navigation data and/or on the basis of actuating states dependent on the actuation by a driver and/or on the basis of states of the gearbox (18) and/or of the drive unit (12) and/or of the clutch device (24) and/or on the basis of other states of the motor vehicle, and to engage a corresponding gear as a target gear in reaction to the activation of a turn indicator signal only in the affirmative case.

8. Motor vehicle according to Claim 1 and according to one of Claims 3 to 7, **characterized in that** the control device (36) is designed such that said control device, by means of the actuator assembly (56) assigned or belonging to the gearbox, engages the potential target gear in the sense of a first shift demand with a relatively low shift force or with a shift force profile with relatively low shift forces.

9. Motor vehicle according to Claim 1 and according to one of Claims 3 to 8, **characterized in that** the control device (36) is designed such that, in the event of the occurrence of a shift demand for the engagement of a target gear differing from the engaged potential gear, said control device, by means of the actuator assembly (56) assigned or belonging to the gearbox, disengages the engaged potential gear in the sense of a second shift demand with a relatively high shift force or with a shift force profile with relatively high shift forces, and by means of the actuator assembly assigned or belonging to the gearbox, engages the target gear corresponding to the occurred shift demand in the sense of a second shift demand with a relatively high shift force or with a shift force profile with relatively high shift forces.

10. Motor vehicle according to one of Claims 1 to 9, **characterized in that** the control device (36) is designed such that, after carrying out a/the overlap shift in which, in association with a presently load-transmitting one of the gearbox input shafts, an initial gear, and in association with a presently not load-transmitting one of the gearbox input shafts, a target gear, are simultaneously engaged and then the clutch arrangement assigned to the previously load-transmitting gearbox input shaft is actuated in the sense of a disengagement and the clutch arrangement assigned to the previously not load-transmitting gearbox input shaft is actuated in the sense of an engagement, said control device, by means of the actuator assembly (56) assigned or belonging to the gearbox, disengages the initial gear in the sense of a first shift demand with a relatively low shift force or with a shift force profile with relatively low shift forces.

11. Motor vehicle according to one of Claims 1 to 10, **characterized in that** the control device (36) is designed such that, when the motor vehicle is at a standstill and/or in driving states of the motor vehicle with a vehicle speed not exceeding a threshold value, said control device identifies all the occurring shift demands as first shift demands and/or checks the occurring shift demands for meaningfulness and engages a relevant gearbox gear or disengages a relevant gearbox gear only for shift demands identified as being meaningful.

12. Motor vehicle according to one of Claims 1 to 11, **characterized in that** the control device (36) is designed such that, as a function of input data, said control device, by means of the actuator assembly (56) assigned or belonging to the gearbox, carries out gearshifts in fully automatic or automated fashion.

13. Motor vehicle according to one of Claims 1 to 12, **characterized in that** the control device (36) provides a fully automatic mode in which the gearshifts are carried out fully automatically as a function of driving states and/or operating states of the vehicle.

14. Motor vehicle according to one of Claims 1 to 13, **characterized in that** the control device (36) provides a manual mode in which the gearshifts are carried out as a function of shift commands given by the driver by means of an operating arrangement (39).

15. Method for shifting a multiple clutch gearbox, in particular double clutch gearbox (18), in which, on the basis of input data and/or operating states of the gearbox and/or operating states of the clutch device and/or operating states of the drive unit and/or driving states of the motor vehicle, low shift forces or shift force profiles with relatively low shift forces are assigned to occurring first shift demands and relatively high shift forces or shift force profiles with relatively high shift forces are assigned to second shift demands, and, by means of the actuator assembly (56) assigned or belonging to the gearbox, relevant gears are engaged with the respectively assigned shift force or with the respectively assigned shift force profile and/or relevant gears are disengaged with the respectively assigned shift force or the respectively assigned shift force profile, with the first shift demands encompassing shift demands which do not occur as a direct reaction to an action of the driver on an operating arrangement of the vehicle, and with the second shift demands encompassing shift demands which occur as a direct reaction to an action of the driver on an operating arrangement of the vehicle.

## Revendications

1. Véhicule automobile comprenant une chaîne de transmission, qui présente une unité d'entraînement (12), une boîte de vitesses (18) avec un premier et un deuxième arbre d'entrée de boîte de vitesses et un dispositif d'embrayage multiple, notamment un dispositif de double embrayage (24), avec un premier agencement d'embrayage (26) associé au premier arbre d'entrée de boîte de vitesses (20) et un deuxième agencement d'embrayage (28) associé au deuxième arbre d'entrée de boîte de vitesses (22), pour le transfert de couple entre l'unité d'entraînement et la boîte de vitesses, un dispositif de commande (36) et un système d'actionneurs (56) étant prévus, des rapports de transmission pouvant être enclenchés et désenclenchés par le dispositif de commande (36) au moyen du système d'actionneurs (56) associé ou appartenant à la boîte de vitesses, en association avec l'un respectif des premier et deuxième arbres d'entrée de boîte de vitesses, et les agencements d'embrayage pouvant être actionnés au moyen d'un système d'actionneurs (32, 34) associé ou appartenant au dispositif d'embrayage,
le système d'actionneurs (56) associé ou appartenant à la boîte de vitesses étant conçu pour exercer des forces de changement de vitesse ajustables de manière variable sur des éléments de changement de vitesse de la boîte de vitesses,
**caractérisé en ce que** l'unité de commande (36) est conçue pour associer de faibles forces de changement de vitesse ou des courbes de forces de changement de vitesse avec de faibles forces de changement de vitesse à des premières demandes de changement de vitesse effectuées sur la base de données d'entrée et/ou d'états de fonctionnement de la boîte de vitesses et/ou d'états de fonctionnement du dispositif d'embrayage et/ou d'états de fonctionnement de l'unité d'entraînement et/ou d'états de conduite du véhicule automobile, et pour associer de plus grandes forces de changement de vitesse ou des courbes de forces de changement de vitesse avec des plus grandes forces de changement de vitesse à des deuxièmes demandes de changement de vitesse, et pour enclencher des rapports concernés au moyen du système d'actionneurs (56) associé ou appartenant à la boîte de vitesses avec la force de changement de vitesse respectivement associée ou avec la courbe de force de changement de vitesse respectivement associée et/ou pour désenclencher des rapports concernés avec la force de changement de vitesse respectivement associée ou la courbe de force de changement de vitesse respectivement associée, les premières demandes de changement de vitesse comprenant les demandes de changement de vitesse qui ne se produisent pas en réaction directe à une action du conducteur sur un agencement de commande du véhicule, et les deuxièmes demandes de changement de vitesse comprenant les demandes de changement de vitesse qui se produisent en réaction directe à une action du conducteur sur un agencement de commande du véhicule.

2. Véhicule automobile selon la revendication 1, **caractérisé en ce que** les deuxièmes demandes de changement de vitesse comprennent les demandes de changement de vitesse qui sont signalées par le conducteur au moyen de l'agencement de commande ou d'un agencement de commande sous forme de souhait de changement de vitesse imminent.

3. Véhicule automobile selon l'une quelconque des revendications 1 ou 2, **caractérisé en ce que** le dispositif de commande (36) est conçu pour préparer un changement de vitesse croisé, dans lequel un rapport de sortie en association avec un des arbres d'entrée de boîte de vitesses transmettant actuellement la charge, et un rapport cible en association avec un des arbres d'entrée ne transmettant pas actuellement la charge sont enclenchés simultanément, puis l'agencement d'embrayage associé à l'arbre d'entrée de boîte de vitesses transmettant la charge jusqu'à présent est actionné dans le sens d'un débrayage et l'agencement d'embrayage associé à l'arbre d'entrée de boîte de vitesses ne transmettant pas la charge jusqu'à présent est actionné dans le sens d'un embrayage, pour déterminer, sur la base de données d'entrée, un rapport cible probable, et pour enclencher celui-ci en association avec l'arbre d'entrée de boîte de vitesses ne transmettant pas actuellement la charge en tant que rapport cible potentiel, en plus d'un rapport (désigné ci-après par rapport de sortie) enclenché en association avec l'arbre d'entrée de boîte de vitesses transmettant actuellement la charge, constituant le rapport de sortie du changement de vitesse croisé à préparer.

4. Véhicule automobile selon la revendication 3, **caractérisé en ce que** le dispositif de commande (36) est conçu pour reconnaître une probabilité accrue d'un rétrogradage à un rapport cible inférieur par rapport au rapport de sortie, sur la base de l'établissement d'un signal de clignotant et/ou sur la base d'un actionnement de la direction dépassant un actionnement minimum, et pour enclencher un rapport correspondant en tant que rapport cible potentiel au moyen du système d'actionneurs (56).

5. Véhicule automobile selon la revendication 4, **caractérisé en ce que** le dispositif de commande (36) est conçu pour reconnaître la probabilité accrue d'un rétrogradage sur la base d'un angle de direction dépassant un angle de direction minimal et/ou sur la base d'une vitesse d'angle de direction dépassant une vitesse d'angle de direction minimale.

6. Véhicule automobile selon la revendication 4 ou 5, **caractérisé en ce que** le dispositif de commande (36) est conçu pour enclencher partiellement, de préférence jusqu'à l'obtention d'une limite de friction, l'agencement d'embrayage (26, respectivement 28) associé à l'arbre d'entrée de boîte de vitesses ne transmettant pas la charge jusqu'à présent au moyen du système d'actionneurs (32, 34) associé au dispositif d'embrayage, pour la préparation du changement de vitesse croisé.

7. Véhicule automobile selon l'une quelconque des revendications 4 à 6, **caractérisé en ce que** le dispositif de commande (36) est conçu pour vérifier que l'enclenchement d'un rapport cible inférieur au rapport de sortie est autorisé ou approprié, sur la base d'états de conduite instantanés et/ou précédents et/ou sur la base de données de navigation et/ou sur la base d'états d'actionnement dépendant de l'actionnement par un conducteur et/ou sur la base d'états de la boîte de vitesses (18) et/ou de l'unité d'entraînement (12) et/ou du dispositif d'embrayage (24) et/ou sur la base d'autres états du véhicule automobile, et pour enclencher un rapport correspondant en tant que rapport cible potentiel en réaction à l'établissement du signal de clignotant uniquement dans le cas où la vérification est positive.

8. Véhicule automobile selon la revendication 1, et selon l'une quelconque des revendications 3 à 7, **caractérisé en ce que** le dispositif de commande (36) est conçu pour enclencher, au moyen du système d'actionneurs (56) associé ou appartenant à la boîte de vitesses, le rapport cible potentiel dans le sens d'une première demande de changement de vitesse avec une force de changement de vitesse inférieure ou une courbe de force de changement de vitesse avec des forces de changement de vitesse inférieures.

9. Véhicule automobile selon la revendication 1 et selon l'une quelconque des revendications 3 à 8, **caractérisé en ce que** le dispositif de commande (36) est conçu pour désenclencher le rapport cible potentiel enclenché dans le sens d'une deuxième demande de changement de vitesse avec une force de changement de vitesse supérieure ou une courbe de force de changement de vitesse avec des forces de changement de vitesse supérieures, à l'apparition d'une demande de changement de vitesse selon laquelle un rapport cible différent du rapport cible potentiel enclenché doit être enclenché, au moyen du système d'actionneurs (56) associé ou appartenant à la boîte de vitesses, et pour enclencher le rapport cible correspondant à la demande de changement de vitesse effectuée dans le sens d'une deuxième demande de changement de vitesse avec une plus grande force de changement de vitesse ou une courbe de force de changement de vitesse avec des forces de changement de vitesse supérieures, au moyen du système d'actionneur associé ou appartenant à la boîte de vitesses.

10. Véhicule automobile selon l'une quelconque des revendications 1 à 9, **caractérisé en ce que** le dispositif de commande (36) est conçu pour désenclencher le rapport de sortie dans le sens d'une première demande de changement de vitesse avec une force de changement de vitesse inférieure ou une courbe de force de changement de vitesse avec des forces de changement de vitesse inférieures, au moyen du système d'actionneurs (56) associé ou appartenant à la boîte de vitesses, après la mise en oeuvre d'un ou du changement de vitesse croisé, dans lequel un rapport de sortie en association avec un des arbres d'entrée de boîte de vitesses transmettant actuellement la charge, et un rapport cible en association avec un des arbres d'entrée de boîte de vitesses ne transmettant pas actuellement la charge sont enclenchés simultanément, puis l'agencement d'embrayage associé à l'arbre d'entrée de boîte de vitesses transmettant la charge jusqu'à présent est actionné dans le sens d'un débrayage et l'agencement d'embrayage associé à l'arbre d'entrée de boîte de vitesses ne transmettant pas la charge jusqu'à présent est actionné dans le sens d'un embrayage.

11. Véhicule automobile selon l'une quelconque des revendications 1 à 10, **caractérisé en ce que** le dispositif de commande (36) est conçu, lorsque le véhicule automobile est à l'arrêt et/ou dans des états de conduite du véhicule automobile avec une vitesse de véhicule ne dépassant pas une valeur seuil, pour identifier toutes les demandes de changement de vitesse produites en tant que premières demandes de changement de vitesse et/ou pour vérifier que les demandes de changement de vitesse produites sont appropriées, et pour n'enclencher un rapport de vitesse concerné que si les demandes de changement de vitesse sont identifiées comme appropriées ou pour désenclencher un rapport de vitesse concerné.

12. Véhicule automobile selon l'une quelconque des revendications 1 à 11, **caractérisé en ce que** le dispositif de commande (36) est conçu pour effectuer automatiquement ou de manière automatisée en fonction de données d'entrée, un changement de rapport au moyen du système d'actionneurs (56) associé ou appartenant à la boîte de vitesses.

13. Véhicule automobile selon l'une quelconque des revendications 1 à 12, **caractérisé en ce que** le dispositif de commande (36) fournit un mode complètement automatique, dans lequel le changement de rapport s'effectue automatiquement en fonction des états de conduite et/ou des états de fonctionnement du véhicule.

14. Véhicule automobile selon l'une quelconque des revendications 1 à 13, **caractérisé en ce que** le dispositif de commande (36) fournit un mode manuel, dans lequel le changement de rapport est effectué en fonction d'ordres de changement de vitesse donnés par le conducteur au moyen d'un agencement de commande (39).

15. Procédé pour passer les vitesses d'une boîte de vitesses à embrayage multiple, notamment d'une boîte de vitesses à double embrayage (18), dans lequel on associe de faibles forces de changement de vitesse ou des courbes de forces de changement de vitesse avec de faibles forces de changement de vitesse à des premières demandes de changement de vitesse effectuées sur la base de données d'entrée et/ou d'états de fonctionnement de la boîte de vitesses et/ou d'états de fonctionnement du dispositif d'embrayage et/ou d'états de fonctionnement de l'unité d'entraînement et/ou d'états de conduite du véhicule automobile, et dans lequel on associe des forces de changement de vitesse supérieures ou des courbes de forces de changement de vitesse aves des forces de changement de vitesse supérieures à des deuxièmes demandes de changement de vitesse, et on enclenche des rapports concernés au moyen du système d'actionneurs (56) associé ou appartenant à la boîte de vitesses, avec la force de changement de vitesse respectivement associée ou avec la courbe de force de changement de vitesse respectivement associée et/ou on désenclenche des rapports concernés avec la force de changement de vitesse respectivement associée ou la courbe de force de changement de vitesse respectivement associée, les premières demandes de changement de vitesse comprenant les demandes de changement de vitesse qui ne se produisent pas en réaction directe à une action du conducteur sur un agencement de commande du véhicule, et les deuxièmes demandes de changement de vitesse comprenant les demandes de changement de vitesse qui se produisent en réaction directe à une action du conducteur sur un agencement de commande du véhicule.
